# EUROPÄISCHE PATENTSCHRIFT

(11) **EP 2 116 720 B1**
(45) Veröffentlichungstag und Bekanntmachung des Hinweises auf die Patenterteilung: **23.01.2013**
(21) Anmeldenummer: 09450095.6
(22) Anmeldetag: 05.05.2009
(51) Int. Cl.: F03B 13/00, F24J 3/08, F25B 27/00

(54) **Wasserkraftwerk mit Abwärmenutzung und Integration einer Wärmepumpe**
Hydroelectric power plant with waste heat recovery and integration of a heat pump
Centrale hydroélectrique avec récupération de la chaleur dissipée et avec l'intégration d'une pompe à chaleur

(30) Priorität: 05.05.2008 AT 7082008
(43) Veröffentlichungstag der Anmeldung: 11.11.2009
(73) Patentinhaber: GEHA Stiftung, 9490 Vaduz (LI)
(72) Erfinder: Günter HIRR, 9360 Friesach (AT)
(74) Vertreter: Hehenberger, Reinhard

(56) Entgegenhaltungen:
- EP-A2- 0 286 628
- EP-A2- 0 916 913
- EP-A2- 1 329 672
- DE-C1- 10 100 714
- FR-A1- 2 420 103

## Beschreibung

Die Erfindung betrifft eine Anlage zur Kraft-Wärme-Kopplung mit wenigstens einem Strom erzeugenden Generator und mit einem Wärmetauscher, wobei die Anlage zur Kraft-Wärme-Kopplung ein Wasserkraftwerk mit wenigstens einer Turbine als Antrieb ist, die den Generator antreibt und wobei wenigstens eine Wärmepumpe mit Energie des Wasserkraftwerks angetrieben ist.

Des Weiteren betrifft die Erfindung ein Verfahren zum Betreiben einer Anlage zur Kraft-Wärme-Kopplung, bei der mittels wenigstens eines Generators Strom erzeugt wird und in der Anlage anfallende Wärme auf ein wärmespeicherndes Medium übertragen wird, wobei wenigstens ein Generator von einer Turbine eines Wasserkraftwerks und wenigstens eine Wärmepumpe mit Energie des Wasserkraftwerks angetrieben wird.

Solche Anlagen zum gleichzeitigen Erzeugen von thermischer und elektrischer Energie sind unter der Bezeichnung Blockheizkraftwerk (BHKW) aus dem Stand der Technik bekannt. Diese bekannten Anlagen weisen eine Brennkraftmaschine auf, die mit einem elektrischen Generator gekoppelt ist und mit Erdgas, Biogas, Biosprit, oder mit Diesel (Heizöl) betrieben wird. Die Brennstoffenergie kann mit Wirkungsgraden zwischen 80 % und 90 % in nutzbare Energie (Wärme als Heizenergie und elektrischer Strom) umgewandelt werden.

Die konventionelle Wärmeversorgung alpiner Siedlungen mit fossilen und auch anderen Brennstoffen stellt aus Sicht des Umweltschutzes aufgrund der Luftverschmutzung und aus der allgemeinen Sicht der Volkswirtschaft wegen der benötigten Devisen- und Auslandsabhängigkeit ein großes Problem dar.

Konventionelle kalorische Kraftwerke ohne Wärmeauskopplung erreichen meist Wirkungsgrade von nur 30 % bis 55 %.

Ebenfalls bekannt sind Wasserkraftanlagen, z.B. aus der EP 0 286 628 oder der DE 101 00 714 C1, bei denen die kinetische Energie des Wassers zur Stromgewinnung herangezogen wird. Solche Anlagen orientieren sich im Wesentlichen am vorhandenen Wasserangebot der Natur, berücksichtigen jedoch unzureichend die Übereinstimmung von Energiebedarf und Nachfrage.

Der Erfindung liegt die Aufgabe zu Grunde, eine Anlage der eingangs genannten Gattung zur Verfügung sowie ein Verfahren zum Betreiben einer solchen Anlage zu stellen, welche den genannten Anforderungen entspricht.

Gelöst wird diese Aufgabe erfindungsgemäß mit einer Anlage, welche die Merkmale des Anspruches 1 aufweist.

Des Weiteren wird diese Aufgabe mit einem Verfahren gelöst, welches die Merkmale des Anspruches 9 aufweist.

Bevorzugte und vorteilhafte Ausführungsformen der erfindungsgemäßen Anlage und des erfindungsgemäßen Verfahrens sind Gegenstand der Unteransprüche.

Dadurch, dass die Anlage zur Kraft-Wärme-Kopplung ein Wasserkraftwerk mit wenigstens einer Turbine ist, dass wenigstens ein Generator mit der kinetischen Energie einer Turbine angetrieben ist und dass wenigstens eine Wärmepumpe mit Energie des Wasserkraftwerks angetrieben ist, wird ökologisch sinnvoll und unabhängig von fossilen Brennstoffen thermische und elektrische Energie bedarfsgerecht produziert, wobei der Wirkungsgrad der Anlage deutlich verbessert wird.

Erfindungsgemäß ist vorgesehen, Wärmeenergie des Wasserkraftwerkes im Zeitraum des größten Jahresbedarfes wenigstens einer Wärmepumpe und im Zeitraum geringeren Jahresbedarfes einem Wärmeverteilernetz oder einer Trocknungsanlage oder einem anderen Wärmeverbraucher zuzuführen.

Somit kann in den sommerlichen und in den winterlichen Monaten Wärmeenergie eines Wasserkraftwerkes entsprechend unterschiedlich eingesetzt werden kann. So kann z.B. durch eine Vorbehandlung von Brennmaterial eine im Sommer nicht benötigte, jedoch ausreichend vorhandene Energie in den Winter, also dem Zeitraum des größten Jahreswärmebedarfes, verlagert werden, d.h. man trocknet mit im Sommer überschüssiger Energie Material, das dann im Winter mit höherem Brennwert (weil getrocknet) verwendet werden kann.

Die erfindungsgemäße Anlage kann abhängig vom variabel vorliegenden Wärmeangebot und -bedarf während des ganzen Jahres energetisch stets optimal und ökologisch sinnvoll betrieben werden, wobei Überschussenergie des Sommers in wertvolle Heizenergie für den Winter umgewandelt werden kann.

Im Rahmen der Erfindung kann Abwärme des Generators oder andere im Bereich der Anlage vorhandene Wärme verwendet werden.

Die erfindungsgemäße Anlage wird im Weiteren als Wasserblockheizkraftwerk (WBHKW) bezeichnet, deren Unterschiede zu einem herkömmlichen BHKW unter anderem die Folgenden sind:

Zum Einen tritt in einem WBHKW anstelle des Brennstoffmotors die kinetische Energie der Wasserturbine eines Wasserkraftwerkes als Antrieb für den Generator, wobei unter anderem neben der Verstromung zusätzlich thermische Energie des Generators gewonnen wird. Die Anlage Turbine/Generator erreicht damit einen Gesamtwirkungsgrad von nahezu 100 %. Zum Anderen wird neben der Verstromung ein Teil der verfügbaren kinetischen Energie einer Wasserkraftanlage (dies kann hier der Generator oder auch eine Turbine sein) für den Antrieb wenigstens einer Wasser-Wasser-Wärmepumpe verwendet.

In einer bevorzugten Ausführungsform der Erfindung sind zwei Turbinen vorgesehen, wobei der Generator mit der kinetischen Energie der ersten Turbine angetrieben ist und wenigstens eine Wärmepumpe mit Energie der zweiten Turbine angetrieben ist. Insbesondere kann im Rahmen der Erfindung wenigstens eine Wärmepumpe mit Energie der zweiten Turbine direkt oder indirekt angetrieben sein.

Vorzugsweise ist eine in einem Kreislauf geführte Leitung für Abluft des Generators vom Generator zum Wärmetauscher und wieder zurück zum Generator angeordnet, so dass in wenigstens einer Wärmepumpe die thermische Energie der Abluft des Generators zur Warmwassererzeugung verwendet wird. Zusätzlich oder alternativ dazu kann ein Kreislauf einer Wärmepumpe, insbesondere einer Wasser/Wasser-Wärmepumpe, mit dem Generator gekoppelt sein, so dass über wenigstens eine Wärmepumpe die thermische Energie des Generators direkt zur Warmwasserversorgung verwendet wird. Alternativ dazu kann ein Kreislauf einer Wärmepumpe mit dem Wärmetauscher gekoppelt sein.

In einer weiteren bevorzugten Ausführungsform der Erfindung ist ein weiterer Wärmetauscher vorgesehen, wobei in wenigstens einer Wärmepumpe die thermische Energie des Turbinenunterwasser, d.h. des nach der Turbine abfließenden Wassers, als Sole im Weiteren Wärmetauscher genutzt wird. Im Rahmen der Erfindung kann die Erwärmung des Turbinenunterwassers nach dem weiteren Wärmetauscher mittels Erdwärme aus Sonden und/oder mittels Wärme eines mit Brennmaterial gefüllten Silos und/oder mittels Wärmerückgewinnung aus einem Wärmeverbrauchernetz erfolgen. Weiters kann wenigstens eine Wärmepumpe mit Grundwasser betrieben werden.

Damit wird die im Turbinenunterwasser vorhandene Wärmeenergie soweit in brauchbare Wärme umgewandelt, dass sie für eine kommerzielle Wärmeverwertung geeignet ist. Bekanntlich bedarf es an Antriebsenergie für Wärmepumpen lediglich nur rund ein Drittel der Leistung von gewonnener Wärmeenergie. Durch den Direktantrieb von Wärmepumpen verbessert man den Gesamtwirkungsgrad. Um also 100 kWh Wärme zu produzieren wären gegenüber einer vorgehenden Verstromung nur etwa 30 kWh Turbinenleistung erforderlich.

Der Grundgedanke als Ausgangslage dieses WBHKW-Energiekonzeptes ist also die Verwertung der neben der Stromgewinnung eines E-Werkes hinaus entstehenden Wärmeenergie. Die wertvolle Energie des Turbinenunterwassers mit Wärmepumpen zu nutzen, ist ein wesentlicher Bestandteil. Diese sowie die aus Turbine/Generator gemeinsam gewonnene Energie ist ganzheitlich zu sehen und ist aufgrund der den herkömmlichen BHKWs sehr ähnlichen energetischen Grundlagen als Energie aus einem WBHKW zu werten. Ein WBHKW erhöht die Gesamtenergiebilanz eines Wasserkraftwerkes wesentlich.

Die Generatorabwärme ist, leistungsabhängig, nur etwa 4% bis 5% der Turbinenleistung. Sie wird bislang - wahrscheinlich aus wirtschaftlichen Gründen bzw. weil als unwichtig befunden - nicht genutzt und mit technischem Aufwand vernichtet, kann jedoch als wertvoller Energiebestandteil einer Wasserkraftanlage, dort wo verwertbar, angesehen werden. So kann z.B. diese Wärmeenergie in Sommermonaten - und auch teilweise weit darüber hinaus - den gesamten Energiebedarf für ein entsprechendes Wärmenetz decken. Ein noch verbleibender Wärmeüberschuss wird nach dem vorliegenden Konzept, wie später beschrieben, thermisch genutzt.

Naturgemäß verringert sich die Stromerzeugung und damit die Generatorleistung eines Kraftwerkes aufgrund des geringeren Wasserdargebotes im Winter, zwangsweise jedoch nicht die Leistungsfähigkeit der Wärmepumpen. Trotzdem hat dies zur Folge, dass die für ein Fernwärmenetz aufzuwendende Wärme nicht allein durch die Generatorabwärme und den Wärmepumpen zur Verfügung gestellt werden kann. Man benötigt also zusätzliche Wärmequellen.

Das Produkt von Wärme aus WBHKWs in Kombination mit ökologisch fundierter Energie z.B. aus Heizkesseln wird in kleineren Fernwärmenetzen zu den Verbrauchern gebracht. Dieses Konzept trägt damit zu einer umweltfreundlichen Energieversorgung bei Nutzung von in der Natur ausreichend vorhandenen und erneuerbaren Ressourcen bei. Die Anlage arbeitet zur Gänze unabhängig von der öffentlichen Stromversorgung; sie bietet daher eine garantierte Versorgungssicherheit auch bei möglichen aber immer häufiger werdenden Katastrophenfällen.

Die Kombination WBHKW mit einer Wärmeversorgung bedeutet eine Wirkungsgradverbesserung von Stromgewinnungsanlagen durch entsprechende Nachrüstung bei bestehenden Anlagen und trägt dem Energiesparen sowie dem weltweit diskutierten Klimaschutz Rechnung. Es stellt durch die vorgesehene Mehrfachnutzung mit von Wasser ausgehenden Energieformen eine zukunftsweisende Alternative zur konventionellen Wärmeversorgung besonders dort dar, wo bisher aufgrund der Kleinheit eines Wärmenetzes der Betrieb einer Wärmeversorgung unwirtschaftlich gewesen wäre.

Die notwendige technische Ausrüstung von Turbinen im Wasserkraftwerk wird vorwiegend von der österreichischen Gesetzeslage bestimmt. Hierbei spielt das Ökostromgesetz und sein Terminus - es kennt kein WBHKW - die entscheidende Rolle. Eine zusätzliche, über die Stromproduktion hinausgehende Energiegewinnung ist daher nicht förderbar, weil das Ökostromgesetz ausschließlich nur die Förderung der Stromgewinnung vorsieht, ebenso fällt sog. Überschussstrom einer kommerziell genutzten Anlage nicht hinein. Normalerweise würde ein Kraftwerk mit nur einer Turbine bestückt. Um diesem Gesetz genüge zu tun, ist das WBHKW in zwei technische Komponenten zu unterteilen: In jene für die alleinige Stromproduktion und in eine für die ggf. turbinenbetriebene Wärmezentrale. Es wird dann also je eine Turbine benötigt. Außer höheren Investitionskosten sind darin unmittelbare Nachteile in technischer Hinsicht nicht zu sehen.

Weitere Einzelheiten, Merkmale und Vorteile der erfindungsgemäßen Anlage ergeben sich aus der nachstehenden Beschreibung unter Bezugnahme auf die angeschlossenen Zeichnungen, in welchen bevorzugte Ausführungsformen dargestellt sind.

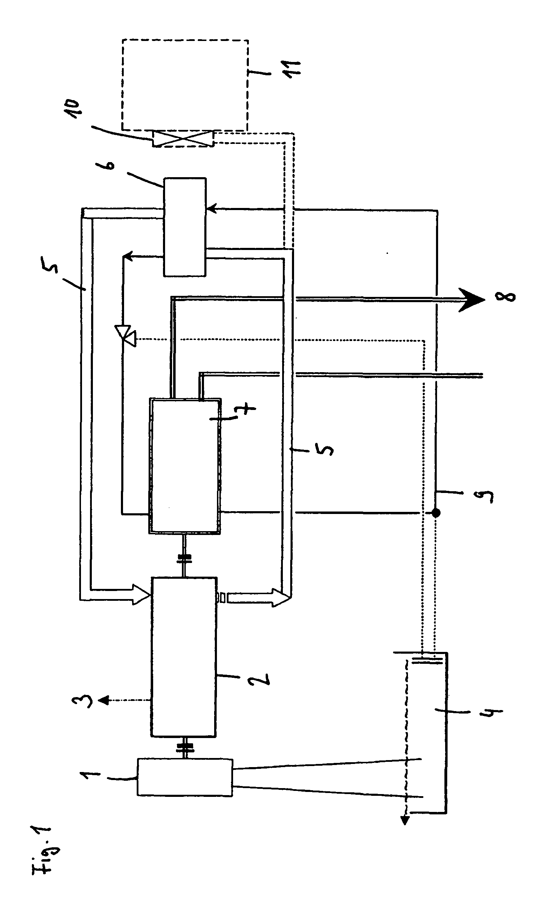

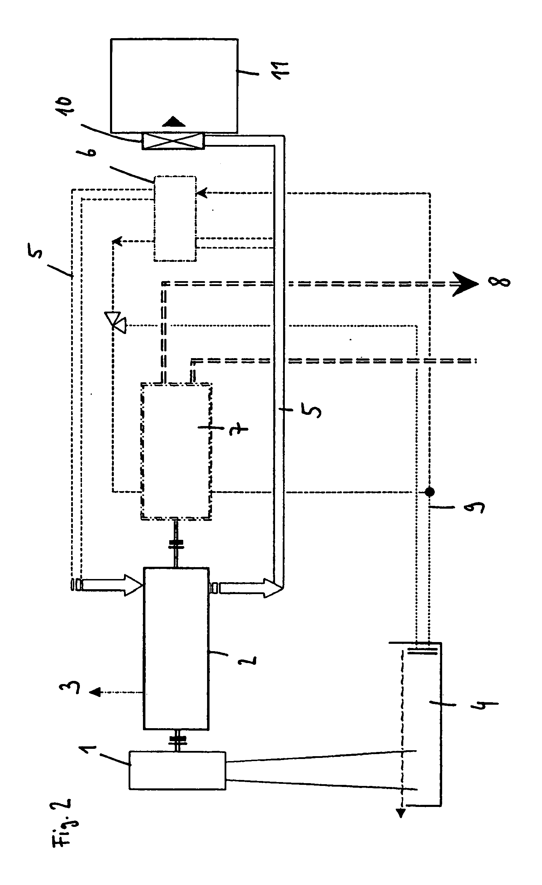

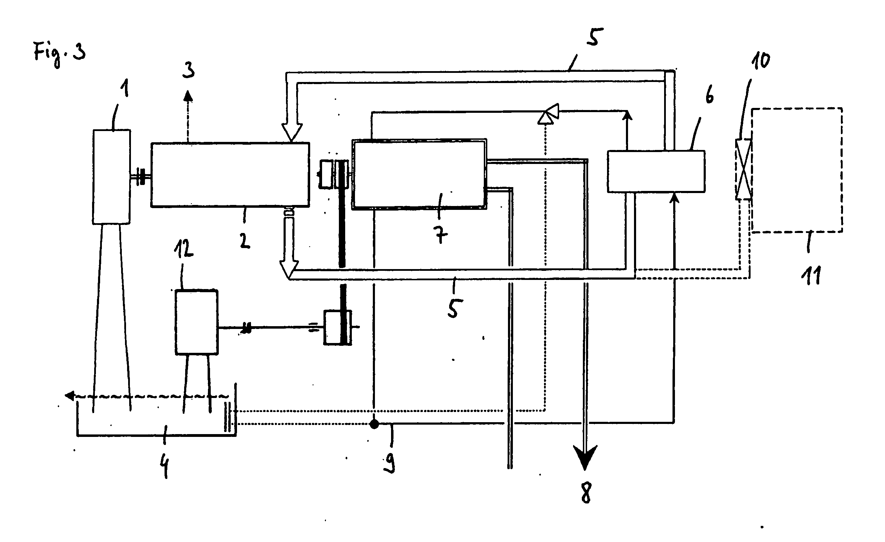

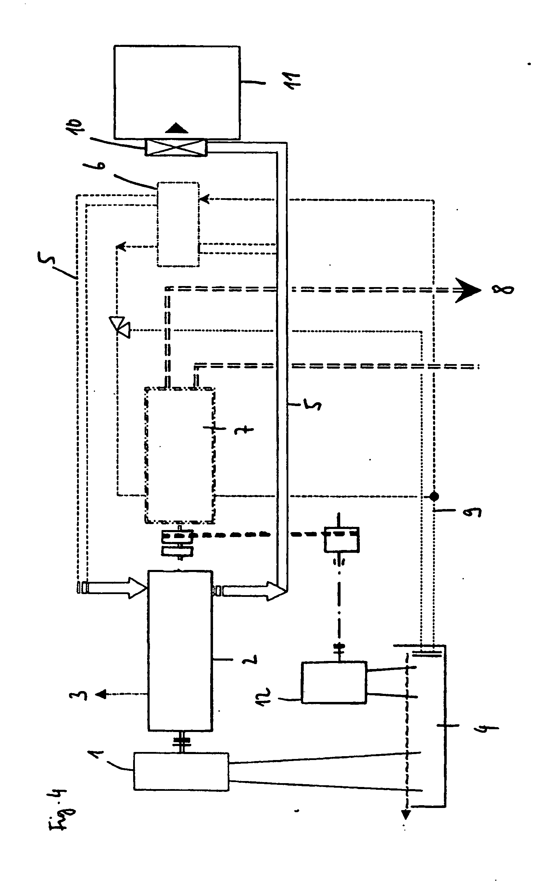

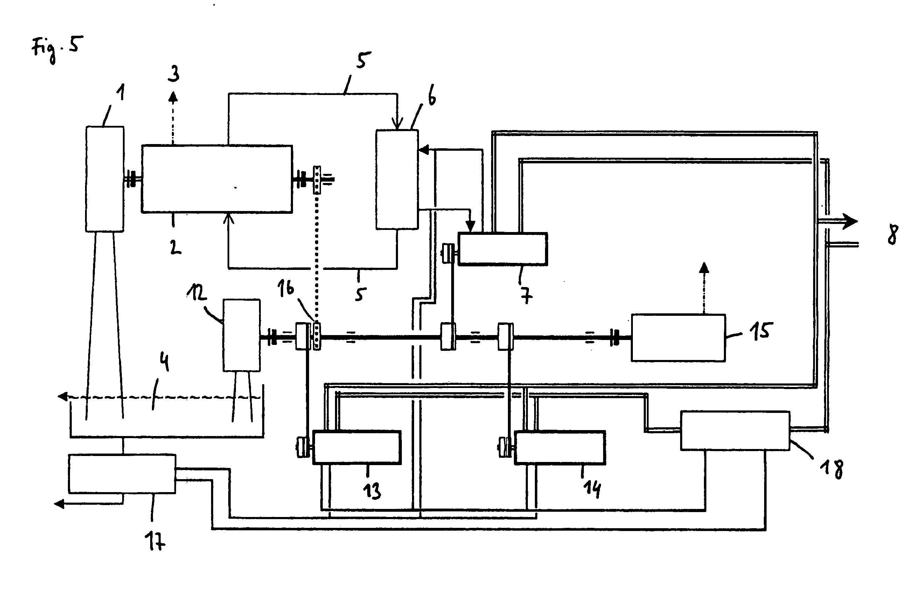

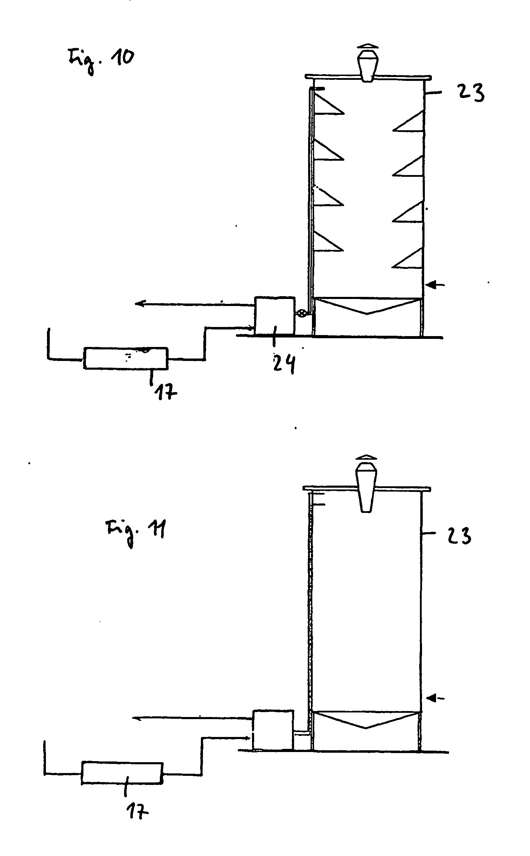

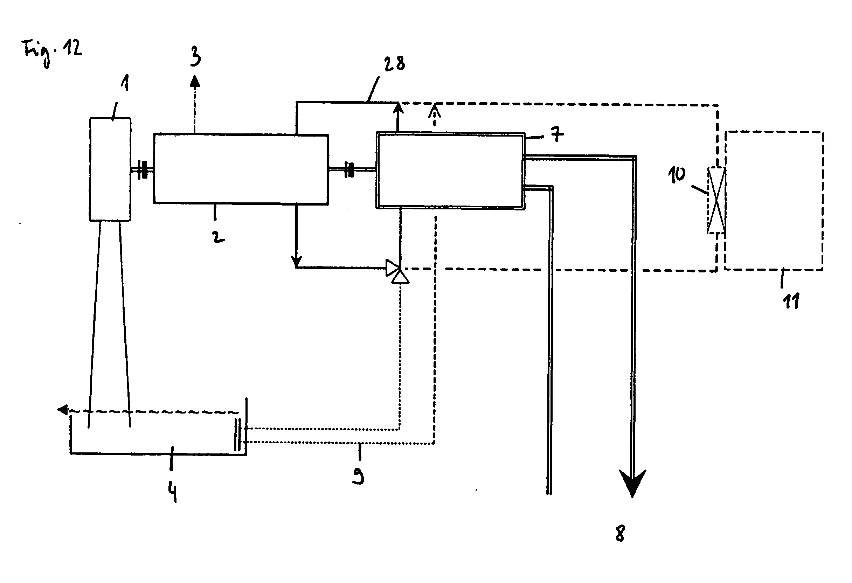

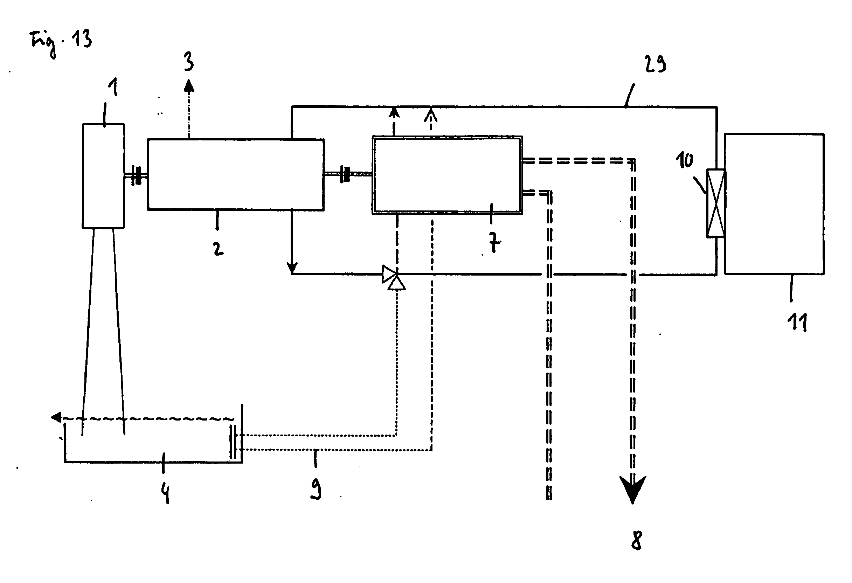

Es zeigt: Fig. 1 eine erste Ausführungsform der erfindungsgemäßen Anlage im Winterbetrieb, Fig. 2 die Ausführungsform der Anlage aus Fig. 1 im Sommerbetrieb, Fig. 3 eine zweite Ausführungsform der erfindungsgemäßen Anlage im Winterbetrieb, Fig. 4 die Ausführungsform der Anlage aus Fig. 3 im Sommerbetrieb, Fig. 5 bis 9 Ausführungsformen der erfindungsgemäßen Anlage, bei welchen Turbinenunterwasser erwärmt wird, Fig. 10 und 11 einen Ausschnitt eines mit der erfindungsgemäßen Anlage gekoppelten Systems zur Wärmegewinnung aus einem Silo, Fig. 12 eine weitere Ausführungsform der erfindungsgemäßen Anlage im Winterbetrieb und Fig. 13 die Ausführungsform der Anlage aus Fig. 12 im Sommerbetrieb.

Die Basis des in den Fig. 1 bis 9, 12 und 13 dargestellten WBHKW bildet jeweils ein Wasserkraftwerk mit einer Turbine 1 und einem mittels der kinetischen Energie der Turbine 1 angetriebenen Generator 2. Der durch den Generator 2 produzierte Strom kann wie aus dem Stand der Technik bekannt in ein Stromnetz 3 und/oder einen Stromverteiler und/oder einem Stromverbraucher eingespeist werden.

Das Wasserkraftwerk wird an einem Gebirgsbach in unmittelbarer Nachbarschaft zu einem Siedlungsgebiet errichtet. Das Gefälle und das Wasserdargebot 4 des Baches müssen ausreichend sein, um ein Projekt grundsätzlich wirtschaftlich zu betreiben wie auch eine thermische Verwertbarkeit der Generatorabwärme technisch zu ermöglichen.

Über die, die reine Stromproduktion als Hauptteil des Wasserkraftwerkes betreffende Komponente soll hier technisch nicht näher eingegangen werden. Sie ist aber der Ursprung des WBHKW-Konzeptes, denn von dem Elektrogenerator 2 soll Wärme rückgewonnen und für Wärmezwecke verwendet werden.

Dies vollzieht sich in der in Fig. 1 gezeigten Ausführungsform, indem eine in einem Kreislauf geführte Leitung 5 für Abluft des Generators 2 vom Generator 2 zu einem Wärmetauscher 6 und wieder zurück zum Generator 2 angeordnet ist, wobei die thermische Energie der warmen Abluft des Generators 2 zu dessen Kühlung in einem geschlossenen Kreislauf über den Wärmetauscher 6 (Luft-Wasser-Wärmetauscher) zur Erzeugung von Warmwasser übertragen wird. Dieses Wasser von ca. 15 bis 20° C wird anschließend in einer mit Energie des Generators 2 angetriebenen Wasser-Wasser-Wärmepumpe 7 auf bis zu 55° C und mehr erwärmt und dem angeschlossenen Wärmeverteilnetz 8 zugeführt.

Zusätzlich ist in Fig. 1 ein Bypass 9 für eine Notkühlung (z.B. bei Stillstand der Wärmeanlage) vorgesehen.

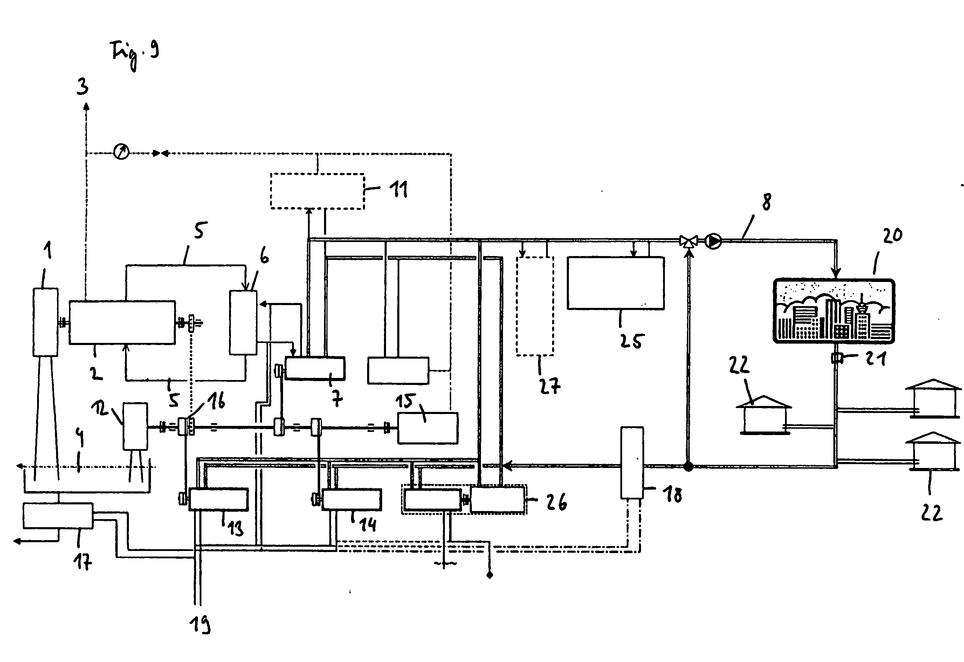

Der Aufbau der in Fig. 2 dargestellten Anlage entspricht im Wesentlichen dem in Fig. 1 gezeigten Aufbau. Der Unterschied liegt darin, dass die warme Abluft des Generators 2 über einen Teil der Leitung 5 einem Ventilator 10 einer Trocknungsanlage 11 (siehe auch Fig. 9) oder einem anderen Wärmeverbraucher zugeführt wird.

In der Anlage gemäß Fig. 3 erfolgt die Kühlung des Generators 2 analog zur Anlage gemäß Fig. 1, indem die Abluft des Generators 2 zur Warmwassererzeugung über die Leitung 5 zum Wärmetauscher 6 geführt wird. Dieses Wasser wird anschließend in der Wasser-Wasser-Wärmepumpe 7 weiter erwärmt und dem Wärmeverteilernetz 8 zugeführt, wobei die Wärmepumpe 7 durch eine zweite Turbine 12 direkt angetriebenen ist.

Der Aufbau der in Fig. 4 dargestellten Anlage entspricht im Wesentlichen dem in Fig. 3 gezeigten Aufbau. Der Unterschied liegt darin, dass die warme Abluft des Generators 2 über einen Teil der Leitung 5 einem Ventilator 10 einer Trocknungsanlage 11 (siehe auch Fig. 9) zugeführt wird.

Insbesondere aus den Fig. 5 bis 8 ist ersichtlich, dass die zweite, kleinere Turbine 12 dem Antrieb der Komponenten zur technischen Wärmeerzeugung, im besonderen von Wärmepumpen 7, 13, 14, dient. Sie ist so ausgelegt, dass sie die Leistung der Wärmepumpen 7, 13, 14 spielend erreicht und zusätzlich einen Stromgenerator 15 für den Strombedarf der Wärmeanlage betreiben kann. Um einen effizienten Wirkungsgrad zu erreichen, verzichtet man hier auf eine vorgeschaltete Verstromung sondern treibt die einzelnen Aggregate direkt über ein Vorgelege mit automatischen Ein- und Ausschaltmechanismen an.

Im Rahmen der Erfindung kann aus Sicherheitsgründen und bei besonderen Notfällen (z.B. Ausfall der zweiten Turbine 12, deren Service usw.) vorgesehen sein, mit der Turbine 1 auch den Antrieb des Wärmeteiles über eine Kupplung 16 zu ermöglichen.

Anhand der Fig. 5 bis 8 sollen im Rahmen der Erfindung mögliche Wärmepumpen, insbesondere Wasser-Wasser-Wärmepumpen, die mit verschiedenen Wärmeträgern als Wärmelieferant zum Einsatz kommen können, verdeutlicht werden:
1) Jene Wärmepumpen 7, welche die bereits beschriebene Wärme des Hauptgenerators 2 nutzt. Ein Kreislauf der Wärmepumpe 7 ist mit dem Wärmetauscher 6 gekoppelt. Sie ist ein fixer Bestandteil der Wärmeanlage.
2) Wärmepumpen, welche die Wärme des Turbinenunterwassers, d.h. des d.h. des nach der zweiten Turbine 12 abfließenden Wassers, als Sole über einen weiteren Wärmetauscher 17 nutzen.

Das Turbinenunterwasser allein kann jedoch nur jene Zeit eines Jahres voll genutzt werden, solange es jene Temperaturen hat, welche eine wirtschaftliche Leistungsziffer der entsprechenden Wärmepumpen 13, 14 zulassen. Eine Abkühlung unter die Temperatur des Bachwassers z.B. auf unter ±0° C ist nicht möglich und wird vom österr. Wasserrechtsgesetz auch nicht zugelassen. Da nun im Winter mit relativ wenig Wärmegewinnung aus dem kalten Turbinenunterwasser zu rechnen ist, muss es für den Gebrauch in den Wärmepumpen 13, 14 erwärmt werden. Die dafür benötigte Wärme kann über einen Wärmetauscher 18 aus dem Rücklauf des Fernwärmenetzes 8 entnommen werden (Fig. 5 und 9). Die dort vorhandene Rücklauftemperatur von ca. 35° C bis 40° C wird also geringfügig abgekühlt. Trotz dieser Energieentnahme verschlechtert sich die thermische Energiebilanz der Anlage nicht, weil wiederum die Wärmepumpen 13, 14 durch eine ideale Soletemperatur mit einer wesentlich besseren Leistungsziffer arbeiten.

Entsprechend der technischen Vorgaben dieses Konzeptes, bedingt durch die Abhängigkeit der Ressource Wasser sowie der geographischen Gegebenheiten, ist eine Fernwärmeversorgung nur für ein nicht zu großes Siedlungsgebiet 20 möglich (Fig. 9). Von der Wärmezentrale aus führt ein Fernwärmenetz 8 zu den verschiedenen Verbrauchern. Dabei ist eine möglichst große Dichte an Abnehmern die Voraussetzung eines wirtschaftlichen Gelingens. Es wird daher notwendig sein, bereits vor Realisierung eines Projektes gegenüber einer kritischen Öffentlichkeit durch Aufklärung neue Argumentationsmöglichkeiten zu liefern, um den Anschluss an Fernwärme aufzuwerten, sodass auftretende Widerstände - im Sinne des Umwelt- und Klimaschutzes und der zukünftig zu erwartenden Energiepreissteigerungen bzw. Verknappung - abgebaut werden und sich so viel wie möglich Anschlusswerber finden.

Eine Übergabestation 21 regelt und misst den Wärmeverbrauch eines Abnehmers. Die gelieferte Wärme an die Verbraucher 20 verfügt im Sommer über eine Temperatur bis ca. 65° und im Winter von 80° C oder mehr. Gegenüber herkömmlichen Wärmenetzen ist die Temperatur geringer. Dadurch und aufgrund eines kleineren Netzes 8 werden die üblicherweise entstehenden Netzverluste bei gleicher Isolierung and Qualität weniger. Sie betragen zwischen 10% und 12%. Naturgemäß ist speziell in den Sommermonaten ein Fernwärmenetz nicht ausgelastet und die Netzverluste besonders hoch.

Mit einer zusätzlich innovativen Komponente dieses Energiekonzeptes werden Netzverluste weiter reduziert, indem bei den Abnehmern eine eigene kleine Wärmepumpe 22 für Heißwasser installiert wird. Dies ist besonders dann energetisch von Vorteil, solange (vorwiegend im Sommer) das Fernwärmenetz 8 nicht ausgelastet ist und es ohnehin eine niedrigere Temperatur hat. Diese Wärmepumpe 22 wird unmittelbar nach der Übergabestation 21 angebracht und aufgrund ihrer geringen Leistung von zirka 2 kW elektrisch pro durchschnittlichem Haushalt von der Wärmezentrale versorgt (die Stromkabel werden mit der Fernwärmeleitung mit verlegt). Zum Betrieb entnimmt sie die Wasserwärme an der Übergabestation 21 und leitet das Warmwasser anschließend in direktem Kreislauf in den Warmwasserboiler. In der normalen Heizperiode kann sie außer Betrieb genommen werden und es wird der Boiler, wie herkömmlich, direkt von der Übergabestation beheizt.

Etwas vom Hauptnetz 8 entferntere Gebäude oder jene welche innerhalb des Hauptwärmenetzes 8 bereits eine Niedertemperaturheizung haben, werden durch ein anderes System mit Wärme beliefert. In solchen Gebäuden wird eine eigene dem Wärmebedarf technisch der Niedertemperaturheizung angepasste Wärmepumpe eingebaut. Sie wird nicht mit dem Heizwasser des Netzvorlaufes sondern an den Leitungsstrang des Netzrücklaufes angeschlossen. Dieser hat einer wesentlich geringere Temperatur, welche für den Betrieb einer derartigen Hauswärmepumpe vollkommen ausreicht. Man erreicht auch sehr gute Leistungsziffern des Aggregates. Der Stromanschluss für diese Wärmepumpen erfolgt ebenfalls über das mit dem Fernwärmenetz 8 mitverlegten Stromkabel. Die Verrechnung dieser so gelieferten Wärme kann entweder über einen Stromzähler oder im herkömmlichen Sinn mit Wärmezähler erfolgen.

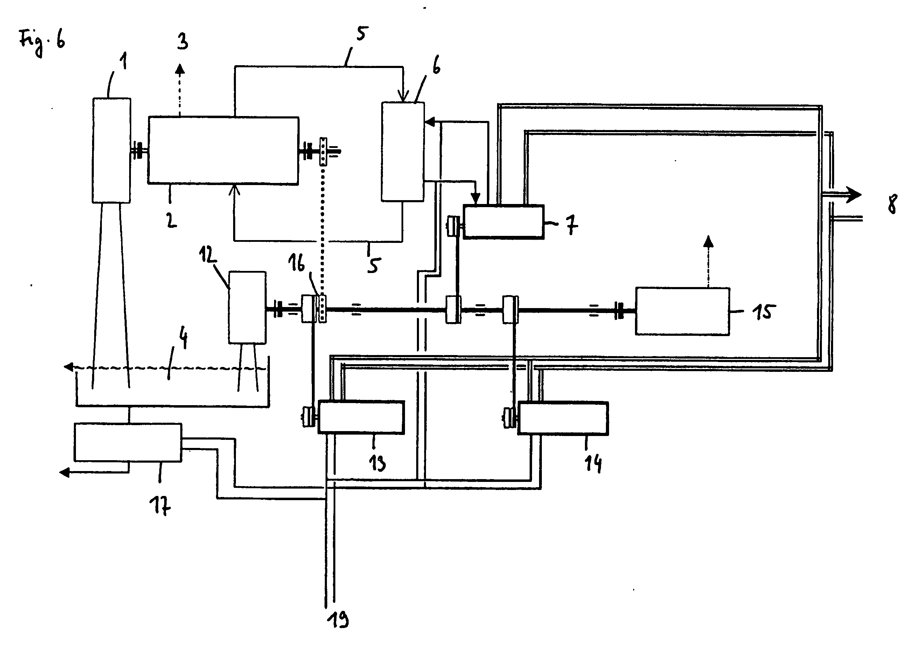

Alternativ oder zusätzlich zur Erwärmung mittels Rücklauf des Fermwärmenetzes 8 könnte die Erwärmung des Turbinenunterwassers auch mit Hilfe der Erdwärme aus Sonden 19, also geothermisch erfolgen (Fig. 6 und 9). Aus wirtschaftlichen Gründen - da als Investition sehr teuer - wäre dies nur dort anzuwenden, wenn aus verschiedenen Gründen eine Abkühlung der Rücklauftemperatur des Wärmenetzes 8 nicht machbar ist. Für diesen Fall müssen die Sonden 19 in der Lage sein, den gesamten Bedarf der Wärmepumpen 13, 14 zu decken. Dazu wären vorab die hydrogeologischen Voraussetzungen auf die Machbarkeit zu untersuchen.

Nach bisweilen groben Schätzungen des Wärmebedarfes einzelner WBHKW-Projekte wird es aus technischen sowie wirtschaftlichen Gründen nicht immer möglich sein, Sonden 19 in der erwünschten Anzahl zu errichten. Zum einen wäre bei einer höherer Anzahl - die Entfernung von einer Sonde 19 zur anderen müsste mindestens ca. 20 m betragen - ein unverhältnismäßig großer Platzbedarf erforderlich; neben der Frage der Verfügbarkeit könnten auch weitere Grundstücksfragen (Sturheit von Grundbesitzern sowie mögliche Zwangsrechte etc.) sehr schwierig werden. Zum Anderen würden die Investitionskosten für eine Vielzahl von Sonden 19 nicht im wirtschaftlich sinnvollen Verhältnis zur gewünschten Wärmeproduktion stehen.

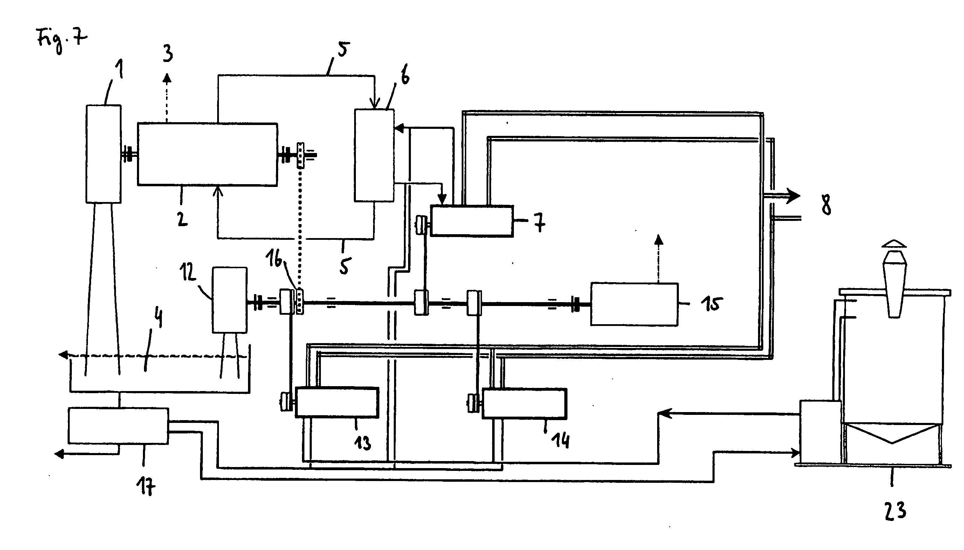

Hier ist an eine Alternative oder Ergänzung zu den Sonden 19 gedacht, welche dieses Gesamtkonzept noch sinnvoller erscheinen lässt. Es geht dabei um einen bisher nicht beschriebenen Wärmelieferanten dieses Systems, nämlich um die Nutzung der Wärme eines mit Brennmaterial gefüllten Silos 23 (Fig. 7). Bekanntlich und durch genügend Beispiele belegt, erzeugt der Inhalt eines Silos 23 durch den Eigendruck der Späne oder Rinde teilweise sehr hohe Temperaturen, welche sogar, bei entsprechender Feuchtigkeit und schlechter Belüftung, bis zur Selbstentzündung führen können.

Wie bereits weiter oben ausgeführt, ist die thermische Verwertung von Turbinenunterwasser mit Temperaturen um die 0° C zur weiteren Abkühlung in Wasser-Wasser-Wärmepumpen und anschließender Rückleitung in ein Gewässer gesetzlich nicht möglich. Wohl wird es möglich sein, das in ausreichender Menge vorhandene Turbinen-unterwasser wärmetechnisch so vor zu behandeln, dass es nach der thermischen Verwendung in den Hauptwärmepumpen mit gleicher oder sogar geringfügig höherer Temperatur in den Bach zurück geleitet werden kann. Für diesen Fall bedarf es lediglich einer Aufwärmung durch vorgeschaltete Wärmepumpen auf ca. 4° bis 4,5° C. Durch die Wärmeentnahme in den Hauptwärmepumpen mit einem Temperaturunterschied von mind. 3,5° bis 4° C arbeitet die Anlage noch mit einer normal guten Leistungsziffer. Anstelle von Sonden 19 - oder in Kombination mit diesen - kann zu dieser hier beschriebenen Vorwärmung des Turbinenunterwassers auch die Silowärme genutzt werden. Zur Wärmegewinnung sind dabei zwei Varianten möglich:

Bei der ersten, in Fig. 10 gezeigten Variante erfolgt die Wärmegewinnung durch eine Luftwärmepumpe 24, welche die aus dem im Inneren eines Silos 23 vorhandene Wärmeenergie über isolierte Luftrohrleitungen absaugt um das im Winter vorhandene Turbinenunterwasser mit einer Temperatur von um die 0° C auf jene Temperatur zu bringen, dass es für die vorhandenen Wasser-Wasser-Wärmepumpe 13, 14 thermisch verwertbar wird. Es wird allerdings nur soviel Luft abgesaugt, um bei einer Vermischung mit Außenluft auf jene Lufttemperatur zu kommen, welche die Luftwärmepumpe 24 mit einer guten Leistungsziffer arbeiten lässt. Für besondere Bedingungen ist der Einsatz dieser Luftwärmepumpe 24 auch im Sommer möglich.

Die Wärmegewinnung aus dem Silo 23 kann bei der zweiten, in Fig. 11 gezeigten Variante auch über eine im oberen Bereich installierte Art Luft-Wasserwärmetauscher erfolgen. Allerdings muss der Silo 23 mit Luftkammern zwischen dem Brennmaterial ausgeführt sein. Durch die aufgestiegene warme Luft im Silo 23 - erhitzt von dessen Inhalt - wird Wasser erwärmt und in einem geschlossenen Kreislauf der oder den vorhandenen Wasser-Wasser-Wärmepumpen, anstelle von Sondenwasser oder mit diesem gemeinsam, zugeleitet. Die für die Wasser-Wasser-Wärmepumpen geeignetste Vorlauftemperatur erreicht man durch das Vermischen mit dem Unterwasser der Turbine 12.

Auch bei einer vom Bedarf abhängigen Anwendung dieser weiteren Systemkomponenten wird durch die Vorbehandlung des Brennmaterials eine im Sommer nicht benötigte, jedoch ausreichend vorhandene Energie in den Winter, also dem Zeitraum des größten Jahreswärmebedarfes verlagert. Um unnötige Wärmeverluste im Silo zu vermeiden sollte er wärmeisoliert sein.

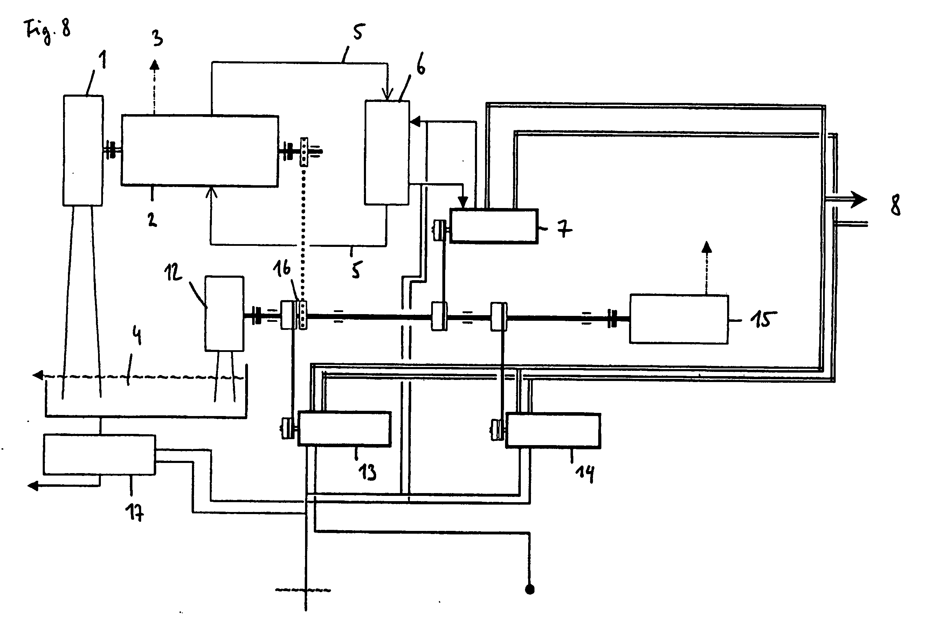

3) Wärmepumpen, welche mit Grundwasser betrieben werden (Fig. 8 und 9). Grundwasser kommt bei Projekten zum Einsatz, wo ein genügend großer Grundwasserkörper vorhanden ist. Allerdings wird dies nicht überall der Fall sein, hydrogeologische Untersuchungen müssen dies bestätigen.

Bis auf die unter 1) genannten Wärmepumpen ist die Anzahl der einzusetzenden Wärmepumpen 13, 14 vom Wärmebedarf eines Fernwärmenetzes 8 bzw. von der Verfügbarkeit der verschiedenen Soleträger abhängig. Es sollte für jedes Projekt ein geeigneter Mix gefunden werden, der den Wärmepumpeneinsatz so effizient wie möglich zulässt. Grundsätzlich wird davon ausgegangen, dass der Anteil des Wärmebedarfes eines Netzes aus Wärmepumpen 7, 13, 14 zirka 15% bis maximal 20% sein soll. Die übrige Energie wird einerseits bzw. vorwiegend mit einem Heizkessel 25 und anderseits mit BHKW's 26 sowie zu einem geringen Teil aus einem Warmwasserspeicher 27 abgedeckt (Fig. 9). Abgeleitet von einem wirtschaftlichen Betrieb gilt dabei, je mehr Wärme aus turbinengetriebenen Wasser-Wasser-Wärmepumpen 7, 13, 14 zur Verfügung steht, je weniger BHKW's 26 kommen zur Aufstellung.

Die BHKW's 26 dieses Energiekonzeptes sind lediglich als Ergänzung zur Wärmeproduktion dort gedacht, wo die benötigte Wärme nicht anders produziert werden kann. Als Kraftstoff wird, wenn vorhanden, Erdgas ansonsten Biosprit eingesetzt. Bis auf ein BHKW 26, welches als Notstrom- und Notwärmeaggregat aufgestellt sein soll, wären, falls nötig, die weiteren als Direktantrieb für Wärmepumpen vorgesehen. BHKW 26 und Wärmepumpe bilden dabei eine kompakte Einheit. Man erreicht dadurch die besten Wirkungsgrade. Trotzdem ist die Wärme aus einem Heizkessel 25 aus wirtschaftlichen und Wartungsgründen den BHKW's 26 vorzuziehen.

Kesselanlagen sind das verbreiteste System zur Wärmeproduktion. Dabei hat besonders die Entwicklung bei Biomassekesseln 25 in den letzten Jahrzehnten große Fortschritte mit einer Technologie erreicht, die mit ausgezeichneten Wirkungsgraden arbeitet und wenig Emissionen zulässt. Biomasse soll auch der Brennstoff sein, welcher in diesem Konzept zum Einsatz kommt.

Die gängigste Biomasse für die Kesselverfeuerung sind Holzpellets, Hackschnitzel, Rinde, Waldabfälle und Sägespäne. Bei einem Preisvergleich stellt man fest, dass Holzpellets am teuersten sind, jedoch aufgrund ihrer Trockenheit den höchsten Heizwert aufweisen. Hackschnitzel sind billiger; es besteht jedoch eine sehr große Nachfrage, weil sie auch für industrielle Zwecke Verwendung finden. Der Ankauf von Sägespänen, Waldabfälle oder Rinde wäre wirtschaftlich am geeignetsten, sie haben aber wegen ihrer normalerweise hohen Feuchtigkeit den Nachteil des niedrigsten Heizwertes. Sägespäne und Waldabfälle haben aber auch Vorteile:
- Sie sind im Einkauf billiger als Hackschnitzel oder Pellets;
- Sie sind leichter verfügbar;
- Sie können je nach Marktpreissituation eingekauft werden;
- Lagerfähigkeit in Silos 23 mit automatischer Beschickung wie auch Austragung;
- dadurch Einsparung von Technik und Arbeit;
   im getrockneten Zustand ist weniger Vorrat zu halten;
- daher geringere Lagerkapazitäten gegenüber Hackschnitzel nötig;
- dies ergibt geringere Grundstücks- und Baukosten (Silos jeder Größe sind Standardprodukte).

Eine Möglichkeit, die Verfeuerung von Sägespänen, Waldabfällen oder Rinde noch wirtschaftlicher zu machen, wäre deren Vortrocknung. Bei vorgetrocknetem Brennmaterial entfällt jene Energie, die im Heizkessel 25 vor der unmittelbaren Verbrennung aufgewendet werden muss, um die notwendige Verdampfung des Wassergehaltes vorzunehmen. Die dadurch gewonnene Energie verbleibt als Heizwert. Dazu eine Gegenüberstellung:

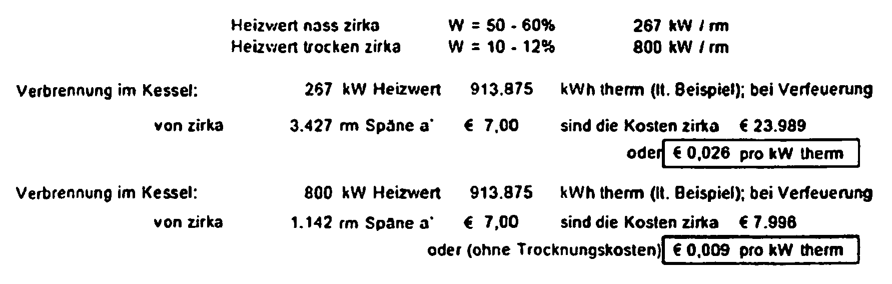

Anlagen für die Trocknung des Heizmaterials sind Stand der Technik.

Wie bereits erwähnt, herrscht nach diesem Wärmegewinnungskonzept während der Sommermonate ein bisher ungenutzter Wärmeüberschuss. Eine Erweiterung des Konzeptes sieht die Trocknung der im Kessel 25 zu verheizenden Sägespäne vor (Fig. 2, 4 und 9). Die zur Trocknung benötigte bzw. vorhandene Überschussenergie des Sommers wird demnach in eine zusätzliche Energie für die Heizperiode, also dem Winter umgewandelt. Es geht in diesem System keinerlei Energie verloren, sie wird energetisch wertvoller umgeschichtet.

In den Fig. 1 bis 9 sind Ausführungsformen der erfindungsgemäßen Anlage mit luftgekühltem Generator 2 dargestellt, wogegen bei den Ausführungsformen in den Fig. 12 und 13 Ausführungsformen von Anlagen mit wassergekühltem Generator 2 gezeigt sind. Im Rahmen der Erfindung sind sämtliche bisher beschriebenen Varianten, insbesondere der Einsatz der zweiten Turbine 12 und das Betreiben von Wärmepumpen 13, 14, auch mit wassergekühltem Generator 2 realisierbar.

Der Unterschied der in Fig. 12 gezeigten Ausführungsform zur in Fig. 1 gezeigten Ausführungsform liegt darin, dass ein Kreislauf 28 der Wasser-Wasser-Wärmepumpe 7 direkt mit dem Generator 2 gekoppelt ist, um den Generator zu kühlen.

Der Aufbau der in Fig. 13 dargestellten Anlage entspricht im Wesentlichen dem in Fig. 12 gezeigten Aufbau. Der Unterschied liegt darin, dass die thermische Energie des Generators 2 über einen Kreislauf 29 einem Ventilator 10 einer Trocknungsanlage 11 (siehe auch Fig. 9) zugeführt wird.

Zusammenfassend kann ein Ausführungsbeispiel der Erfindung dargestellt werden wie folgt:

Bei einem Verfahren zum Betreiben einer Anlage zur Kraft-Wärme-Kopplung, bei der mittels wenigstens eines Generators 2 Strom erzeugt wird und in der Anlage anfallende Wärme als brauchbare Wärme verwendet wird, wobei wenigstens ein Generator 2 von einer Turbine 1 eines Wasserkraftwerks und wenigstens eine Wärmepumpe 7, 13, 14 mit Energie des Wasserkraftwerks angetrieben wird, wird Wärmeenergie des Wasserkraftwerks im Zeitraum des größten Jahreswärmebedarfes wenigstens einer Wärmepumpe 7, 13, 14 und im Zeitraum geringeren Jahreswärmebedarfes einem Wärmeverteilernetz 8 oder einer Trocknungsanlage 11 oder einem anderen Wärmeverbraucher zugeführt.

## Patentansprüche

1. Anlage zur Kraft-Wärme-Kopplung mit wenigstens einem Strom erzeugenden Generator (2) und mit einem Wärmetauscher (6), wobei die Anlage zur Kraft-Wärme-Kopplung ein Wasserkraftwerk mit wenigstens einer Turbine (1) als Antrieb ist, die den Generator (2) antreibt und wobei wenigstens eine Wärmepumpe (7, 13, 14) mit Energie des Wasserkraftwerks angetrieben ist, **dadurch gekennzeichnet, dass** Wärmeenergie des Wasserkraftwerkes im Zeitraum des größten Jahresbedarfes wenigstens einer Wärmepumpe und im Zeitraum geringeren Jahresbedarfes einem Wärmeverteilernetz oder einer Trocknungsanlage oder einem anderen Wärmeverbraucher zuführbar ist, und dass eine in einem Kreislauf geführte Leitung (5) für Abwärme des Generators (2) vom Generator (2) zum Wärmetauscher (6) und wieder zurück zum Generator (2) angeordnet ist.

2. Anlage nach Anspruch 1, **dadurch gekennzeichnet, dass** wenigstens eine Wärmepumpe (7) mit Energie des Generators (2) angetrieben ist.

3. Anlage nach Anspruch 1 oder 2, **dadurch gekennzeichnet, dass** wenigstens eine Wärmepumpe (7, 13, 14) durch wenigstens eine Turbine angetrieben ist.

4. Anlage nach Anspruch 3, **dadurch gekennzeichnet, dass** zwei Turbinen (1, 12) vorgesehen sind, wobei der Generator (2) mit der kinetischen Energie der ersten Turbine (1) angetrieben ist und wenigstens eine Wärmepumpe (7, 13, 14) mit Energie der zweiten Turbine (12) angetrieben ist.

5. Anlage nach Anspruch 4, **dadurch gekennzeichnet, dass** wenigstens eine Wärmepumpe (7, 13, 14) mit Energie der zweiten Turbine (12) direkt angetrieben ist.

6. Anlage nach einem der Ansprüche 1 bis 5, **dadurch gekennzeichnet, dass** eine in einem Kreislauf geführte Leitung (5) für Abluft des Generators (2) vom Generator (2) zum Wärmetauscher (6) und wieder zurück zum Generator (2) angeordnet ist.

7. Anlage nach einem der Ansprüche 1 bis 6, **dadurch gekennzeichnet, dass** wenigstens eine Wärmepumpe (7) eine Wasser/Wasser-Wärmepumpe ist und dass ein Kreislauf der Wärmepumpe (7) mit dem Generator (2) gekoppelt ist.

8. Anlage nach einem der Ansprüche 1 bis 6, **dadurch gekennzeichnet, dass** die wenigstens eine Wärmepumpe (7) eine Wasser/Wasser-Wärmepumpe ist und dass ein Kreislauf der Wärmepumpe (7) mit dem Wärmetauscher (6) gekoppelt ist.

9. Verfahren zum Betreiben einer Anlage zur Kraft-Wärme-Kopplung, bei der mittels wenigstens eines Generators (2) Strom erzeugt wird und in der Anlage anfallende Wärme auf ein wärmespeicherndes Medium übertragen wird, wobei wenigstens ein Generator (2) von einer Turbine (1) eines Wasserkraftwerks und wenigstens eine Wärmepumpe (7, 13, 14) mit Energie des Wasserkraftwerks angetrieben wird, **dadurch gekennzeichnet, dass** Wärmeenergie des Wasserkraftwerkes im Zeitraum des größten Jahresbedarfes wenigstens einer Wärmepumpe und im Zeitraum geringeren Jahresbedarfes einem Wärmeverteilernetz oder einer Trocknungsanlage oder einem anderen Wärmeverbraucher zugeführt wird, und dass in wenigstens einer Wärmepumpe (7) die thermische Energie der Abwärme des Generators (2) zur Warmwassererzeugung verwendet wird.

10. Verfahren nach Anspruch 9, **dadurch gekennzeichnet, dass** wenigstens eine Wärmepumpe (7) mit Energie des Generators (2) angetrieben wird.

11. Verfahren nach Anspruch 9 oder 10, **dadurch gekennzeichnet, dass** wenigstens eine Wärmepumpe (7, 13, 14) durch wenigstens eine Turbine angetrieben wird.

12. Verfahren nach Anspruch 11, **dadurch gekennzeichnet, dass** zwei Turbinen (1, 12) verwendet werden, wobei die kinetische Energie der ersten Turbine (1) als Antrieb für den Generator (2) dient und Energie der zweiten Turbine (12) als Antrieb für wenigstens eine Wärmepumpe (7, 13, 14) dient.

13. Verfahren nach Anspruch 12, **dadurch gekennzeichnet, dass** wenigstens eine Wärmepumpe (7, 13, 14) mit Energie der zweiten Turbine direkt angetrieben ist.

14. Verfahren nach einem der Ansprüche 9 bis 13, **dadurch gekennzeichnet, dass** in wenigstens einer Wärmepumpe (7) die thermische Energie der Abluft des Generators (2) zur Warmwassererzeugung verwendet wird.

15. Verfahren nach einem der Ansprüche 9 bis 14, **dadurch gekennzeichnet, dass** ein weiterer Wärmetauscher (17) vorgesehen ist und dass in wenigstens einer Wärmepumpe (13, 14) die thermische Energie des Turbinenunterwasser als Sole im weiteren Wärmetauscher (17) genutzt wird.

16. Verfahren nach Anspruch 15, **dadurch gekennzeichnet, dass** die Erwärmung des Turbinenunterwassers nach dem weiteren Wärmetauscher (17) mittels Erdwärme aus Sonden erfolgt.

17. Verfahren nach Anspruch 15 oder 16, **dadurch gekennzeichnet, dass** die Erwärmung des Turbinenunterwassers nach dem weiteren Wärmetauscher (17) mittels Wärme eines mit Brennmaterial gefüllten Silos erfolgt.

18. Verfahren nach einem der Ansprüche 15 bis 17, **dadurch gekennzeichnet, dass** die Erwärmung des Turbinenunterwassers mittels Wärmerückgewinnung aus einem Wärmeverbrauchernetz (8) erfolgt.

19. Verfahren nach einem der Ansprüche 9 bis 18, **dadurch gekennzeichnet, dass** wenigstens eine Wärmepumpe (7, 13, 14) mit Grundwasser betrieben wird.

## Claims

1. A plant for combined heat and power, with at least one generator (2) generating power, and with a heat exchanger (6), wherein the combined heat and power plant is a hydroelectric power plant, with at least one turbine (1) as a drive unit, which drives the generator (2), and wherein at least one heat pump (7, 13, 14) is driven with energy from the hydroelectric power plant, **characterised in that**, thermal energy from the hydroelectric power plant in the period of greatest annual requirement can be supplied to at least one heat pump, and in the period of lesser annual requirement can be supplied to a thermal energy distribution network or to a drying plant or to another thermal energy consumer, and **in that** pipework (5) is arranged in a circuit to feed generator (2) waste heat from the generator (2) to the heat exchanger (6) and back to the generator (2).

2. The plant in accordance with Claim 1, **characterised in that**, at least one heat pump (7) is driven with energy from the generator (2).

3. The plant in accordance with Claim 1 or 2, **characterised in that**, at least one heat pump (7, 13, 14) is driven by at least one turbine.

4. The plant in accordance with Claim 3, **characterised in that**, two turbines (1, 12) are provided, wherein the generator (2) is driven by the kinetic energy from the first turbine (1), and at least one heat pump (7, 13, 14) is driven with energy from the second turbine (12).

5. The plant in accordance with Claim 4, **characterised in that**, at least one heat pump (7, 13, 14) is directly driven with energy from the second turbine (12).

6. The plant in accordance with one of the Claims 1 to 5, **characterised in that**, pipework (5) is arranged in a circuit to feed generator (2) waste air from the generator (2) to the heat exchanger (6) and back to the generator (2).

7. The plant in accordance with one of the Claims 1 to 6, **characterised in that**, at least one heat pump (7) is a water/water heat pump, and **in that**, one circuit of the heat pump (7) is coupled with the generator (2).

8. The plant in accordance with one of the Claims 1 to 6, **characterised in that**, the at least one heat pump (7) is a water/water heat pump, and **in that**, one circuit of the heat pump (7) is coupled with the heat exchanger (6).

9. A method for the operation of a plant for combined heat and power, in which power is generated by means of at least one generator (2) and heat accruing in the plant is transferred to a thermal storage medium, wherein at least one generator (2) is driven by a turbine (1) of a hydroelectric power plant, and at least one heat pump (7, 13, 14) is driven with energy from the hydroelectric power plant, **characterised in that**, thermal energy of the hydroelectric power plant in the period of greatest annual requirement is supplied to at least one heat pump, and in the period of lesser annual requirement is supplied to a thermal energy distribution network or a drying plant or to another thermal energy consumer, and **in that**, in at least one heat pump (7) the thermal energy of the generator (2) waste heat is used to generate hot water.

10. The method in accordance with Claim 9, **characterised in that**, at least one heat pump (7) is driven with energy from the generator (2).

11. The method in accordance with Claim 9 or 10, **characterised in that**, at least one heat pump (7, 13, 14) is driven by at least one turbine.

12. The method in accordance with Claim 11, **characterised in that**, two turbines (1, 12) are used, wherein the kinetic energy from the first turbine (1) serves to drive the generator (2), and energy from the second turbine (12) serves to drive at least one heat pump (7, 13, 14).

13. The method in accordance with Claim 12, **characterised in that**, at least one heat pump (7, 13, 14) is directly driven with energy from the second turbine.

14. The method in accordance with one of the Claims 9 to 13, **characterised in that**, in at least one heat pump (7) the thermal energy of the generator (2) waste air is used to generate hot water.

15. The method in accordance with one of the Claims 9 to 14, **characterised in that**, a further heat exchanger (17) is provided, and **in that**, in at least one heat pump (13, 14) the thermal energy of the water exiting the turbine is used as brine in the further heat exchanger (17).

16. The method in accordance with Claim 15, **characterised in that**, the heating of the water exiting the turbine after the further heat exchanger (17) takes place by means of geothermal energy from probes.

17. The method in accordance with Claim 15 or 16, **characterised in that**, the heating of the water exiting the turbine after the further heat exchanger (17) takes place by means of heat from a silo filled with fuel.

18. The method in accordance with one of the Claims 15 to 17, **characterised in that**, the heating of the water exiting the turbine takes place by means of thermal recovery from a thermal energy consumer network (8).

19. The method in accordance with one of the Claims 9 to 18, **characterised in that**, at least one heat pump (7, 13, 14) is driven with groundwater.

## Revendications

1. Installation pour l'accouplement force-chaleur, comprenant au moins un générateur (2) générant du courant et un échangeur de chaleur (6), l'installation pour l'accouplement force-chaleur étant une centrale hydraulique comprenant au moins une turbine (1) comme entraînement, qui entraîne le générateur (2) et au moins une pompe à chaleur (7, 13, 14) étant entraînée avec de l'énergie de la centrale hydraulique, **caractérisée en ce que** de l'énergie thermique de la centrale hydraulique peut être amenée au cours de la période des plus grands besoins annuels à au moins une pompe à chaleur et au cours de la période des plus faibles besoins annuels à un réseau répartiteur de chaleur ou à une installation de séchage ou à un autre consommateur de chaleur, et **en ce qu'**une conduite (5) guidée dans un circuit pour de la chaleur perdue du générateur (2) est disposée du générateur (2) vers l'échangeur de chaleur (6) et revient au générateur (2).

2. Installation selon la revendication 1, **caractérisée en ce qu'**au moins une pompe à chaleur (7) est entraînée avec de l'énergie du générateur (2).

3. Installation selon la revendication 1 ou 2, **caractérisée en ce qu'**au moins une pompe à chaleur (7, 13, 14) est entraînée par au moins une turbine.

4. Installation selon la revendication 3, **caractérisée en ce que** deux turbines (1, 12) sont prévues, le générateur (2) étant entraînée avec l'énergie cinétique de la première turbine (1) et au moins une pompe à chaleur (7, 13, 14) est entraînée avec de l'énergie de la seconde turbine (12).

5. Installation selon la revendication 4, **caractérisée en ce qu'**au moins une pompe à chaleur (7, 13, 14) est entraînée directement avec de l'énergie de la seconde turbine (12).

6. Installation selon l'une des revendications 1 à 5, **caractérisée en ce qu'**une conduite (5) guidée dans un circuit pour de l'air perdue du générateur (2) est disposée du générateur (2) vers l'échangeur de chaleur (6) et revient au générateur (2).

7. Installation selon l'une des revendications 1 à 6, **caractérisée en ce qu'**au moins une pompe à chaleur (7) est une pompe eau/eau et **en ce qu'**un circuit de la pompe à chaleur (7) est couplé avec le générateur (2).

8. Installation selon l'une des revendications 1 à 6, **caractérisée en ce que** la au moins une pompe à chaleur est une pompe à chaleur eau/eau et **en ce qu'**un circuit de la pompe à chaleur (7) est couplé avec l'échangeur de chaleur (6).

9. Procédé pour faire fonctionner une installation pour l'accouplement force-chaleur, sur laquelle le courant est généré au moyen d'au moins un générateur (2) et la chaleur occasionnée dans l'installation est transmisé à un fluide stockant la chaleur, sachant qu'au moins un générateur (2) est entraîné par une turbine (1) d'une centrale hydraulique et au moins une pompe à chaleur (7, 13, 14) avec de l'énergie de la centrale hydraulique, **caractérisé en ce que** de l'énergie de chaleur de la centrale hydraulique est amenée au cours de la période des plus grands besoins annuels à au moins une pompe à chaleur et au cours de la période de plus faible besoin annuel à un réseau répartiteur de chaleur ou à une installation de chauffage ou à un autre conservateur de chaleur, et **en ce que**, dans au moins une pompe à chaleur (7), l'énergie thermique de la chaleur perdue du générateur (2) est utilisée pour la production d'eau chaude.

10. Procédé selon la revendication 9, **caractérisé en ce qu'**au moins une pompe à chaleur (7) est entraînée avec de l'énergie du générateur (2).

11. Procédé selon la revendication 9 ou 10, **caractérisé en ce qu'**au moins une pompe à chaleur (7, 13, 14) est entraîné par au moins une turbine.

12. Procédé selon la revendication 11, caractérisé en qu'on utilise deux turbines (1, 12), l'énergie cinétique de la première turbine (1) faisant office d'entraînement pour le générateur (2) et l'énergie de la seconde turbine (12) faisant office d'entraînement pour au moins une pompe à chaleur (7, 13, 14).

13. Procédé selon la revendication 12, **caractérisé en ce qu'**au moins une pompe à chaleur (7, 13, 14) est entraînée directement avec de l'énergie de la seconde turbine.

14. Procédé selon l'une des revendications 9 à 13, **caractérisé en ce que**, dans au moins une pompe à chaleur (7), l'énergie thermique de l'air perdue du générateur (2) est utilisée pour la production d'eau chaude.

15. Procédé selon l'une des revendications 9 à 14, **caractérisé en ce qu'**un autre échangeur de chaleur (17) est prévu et **en ce que**, dans au moins une pompe à chaleur (13, 14), l'énergie thermique de l'eau inférieure de turbine est utilisée comme saumure dans l'autre échangeur de chaleur (17).

16. Procédé selon la revendication 15, **caractérisé en ce que** le réchauffement de l'eau inférieure de turbine en aval de l'autre échangeur de chaleur (17) s'effectue au moyen de géothermie provenant de sondes.

17. Procédé selon la revendication 15 ou 16, **caractérisé en ce que** le réchauffement de l'eau inférieure de turbine en aval de l'autre échangeur de chaleur (17) s'effectue au moyen de chaleur d'un silo rempli de matériau combustible.

18. Procédé selon l'une des revendications 15 à 17, **caractérisé en ce que** le réchauffement de l'eau inférieure de turbine s'effectue au moyen de récupération de chaleur à partir d'un réseau répartiteur de chaleur (8).

19. Procédé selon l'une des revendications 9 à 18, **caractérisé en ce qu'**au moins une pompe à chaleur (7, 13, 14) est utilisée avec de l'eau souterraine.
